Europäisches Patentamt

European Patent Office

Office européen des brevets

(19)

(11) Numéro de publication: **0 091 871**
**A2**

## (12) DEMANDE DE BREVET EUROPEEN

(21) Numéro de dépôt: **83400711.4**

(22) Date de dépôt: **08.04.83**

(51) Int. Cl.³: **F 24 J 3/02**

(30) Priorité: **09.04.82 FR 8206286**

(43) Date de publication de la demande:
**19.10.83 Bulletin 83/42**

(84) Etats contractants désignés:
**AT BE CH DE FR GB IT LI LU NL SE**

(71) Demandeur: **CREUSOT-LOIRE**
**42 rue d'Anjou**
**F-75008 Paris(FR)**

(72) Inventeur: **Sevelinge, Gérard**
**9 rue de St. Gengoux**
**F-71300 Montceau-les-Mines(FR)**

(72) Inventeur: **Pido, Jean-Claude**
**Parc du Tennis Bat. P No 31**
**F-71200 Le Creusot(FR)**

(74) Mandataire: **Dupuy, Louis et al,**
**CREUSOT-LOIRE 15 rue Pasquier**
**F-75383 Paris Cedex 8(FR)**

(54) **Réflecteur solaire concave.**

(57) Ce réflecteur solaire concave est constitué d'une pluralité de miroirs rigides élémentaires (2) disposés les uns à côté
des autres de façon à constituer une surface réfléchissante
concave de grandes dimensions, chacun de ces miroirs (2)
étant maintenu individuellement dans sa position à l'aide
d'un support rigide (3) scellé dans le sol (1).

Application aux centrales solaires à réflecteur fixe de
grandes dimensions.

Fig 1

EP 0 091 871 A2

Croydon Printing Company Ltd

"Réflecteur solaire concave"

La présente invention concerne les réflecteurs solaires concaves destinés à concentrer les rayons captés vers un foyer où peut être placée, par exemple, une chaudière.

Pour réaliser des centrales solaires de grande puissance, par exemple de 1 MW ou d'avantage, il est nécessaire de réaliser un réflecteur concave de très grandes dimensions. Dans ce cas, il est plus facile d'installer un réflecteur fixe sphérique qui permet de concentrer les rayons solaires sur une chaudière montée mobile et dont la position est assujettie aux mouvements apparents du soleil. Dans une telle centrale solaire, le réflecteur concave de grandes dimensions, monté fixe, constitue l'un des éléments essentiels de la centrale qui soulève de nombreux problèmes techniques de conception et de réalisation, et qui représente une part importante du coût de la centrale.

Les réflecteurs solaires de grandes dimensions doivent pouvoir conserver très longtemps leurs qualités optiques, tout en étant exposés au vent, aux précipitations, ou à toute autre intempérie. D'autre part, les réflecteurs solaires doivent pouvoir être installés dans des zones géographiques éloignées/d'accès difficile, et leur installation sur le site doit pouvoir s'effectuer dans de bonnes conditions économiques, c'est à dire avec un minimum de moyens techniques et de personnel qualifié.

Les réflecteurs fixes de grandes dimensions connus actuellement sont généralement constitués de plusieurs miroirs reliés entre eux et maintenus en place par des structures support complexes. Ces grands ensembles entrainent des travaux de terrassement ou de Génie Civil importants et sont constitués d'élément de construction lourds et onéreux.

La présente invention vise à palier ces inconvénients. Elle concerne en conséquence un réflecteur solaire concave.

Selon une caractéristique essentielle de cette invention, le réflecteur est constitué d'une pluralité de miroirs rigides élémentaires disposés les uns à côté des autres de façon à constituer une surface réfléchissante concave de grande dimension, chacun de ces miroirs étant maintenu individuellement dans sa position, à l'aide d'un support rigide scellé dans le sol.

D'autres caractéristiques et avantages paraîtront lors de la description détaillée de l'exemple de réalisation qui va suivre, illustrées par les dessins annexés.

La figure 1 représente, en coupe, un réflecteur solaire conforme à l'invention.

La figure 2 représente ce même réflecteur solaire en vue de dessus selon A.

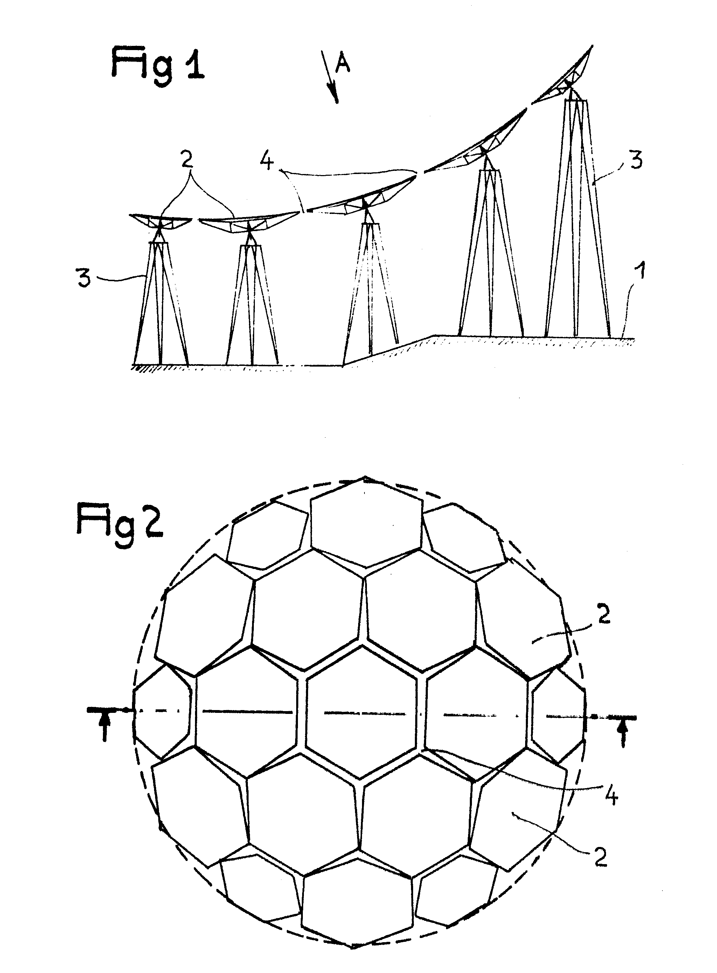

En se reportant à la figure 1, on distingue une installation formant réflecteur solaire reposant sur un sol 1. La surface concave du réflecteur, qui peut être par exemple sphérique, est obtenue par un ensemble de miroirs 2 disposés les uns à côté des autres, sans liaison entre eux. Chacun de ces miroirs 2 est maintenu en place uniquement par une liaison rigide individuelle 3 avec le sol 1. Ces supports rigides 3 de chaque miroir 2 sont de hauteurs différentes pour chaque miroir associé, de façon à pouvoir maintenir tous les miroirs 2 dans leur position fixe prédéterminée afin qu'ils constituent tous ensemble la surface réfléchissante concave, pratiquement continue et de grandes dimensions, du réflecteur. Les supports rigides 3 peuvent être avantageusement constitués par des structures tubulaires triangulées dont les extrémités inférieures sont scellées dans le sol 1 et dont l'extrémité supérieure est reliée rigidement à la partie arrière du miroir 2. Chaque miroir 2 peut être avantageusement constitué d'une surface réfléchissante de forme sphérique, de même rayon de courbure que le rayon de courbure du réflecteur de grandes dimensions résultant de l'ensemble des miroirs 2. Bien que cesmiroirs 2 ne soient pas rattachés directement les uns aux autres, il est préférable de les disposer le plus près possible les uns des autres, avec un espacement minimal 4, afin de constituer une surface réfléchissante pratiquement continue et de très bon rendement. On peut, pour cela donner aux miroirs 2 une forme polygonale, par exemple hexagonale, comme on peut le voir distinctement en figure 2. On peut remarquer en effet, que la forme hexagonale donnée aux miroirs 2 permet la constitution d'un réflecteur sphérique de très bon rendement optique utilisant des miroirs dont la totalité ou la plupart sont identiques, ce qui facilite la fabrication et le montage d'un tel ensemble.

Le réflecteur solaire conforme à l'invention, tel que décrit précédemment, présente une bonne fiabilité et une grande simplicité de réalisation. En effet, comme chaque miroir 2 qui le compose est indépendant des autres miroirs, les calculs de résistance de l'ensemble de la structure, principalement aux actions du vent, sont simplifiés puisqu'ils peuvent se ramener au calcul de résistance de chaque miroir pris individuellement. Cette structure de réflecteur évite le risque que l'ensemble des efforts exercés sur le réflecteur ne se concentre en un point d'attache particulier de la structure. Le réflecteur conforme à l'invention peut faciliter aussi l'évacuation de l'eau de pluie ou de la neige, peut faciliter le nettoyage, l'entretien ou le règlage de chaque miroir par une intervention individuelle, peut faciliter le changement individuel d'un miroir défectueux. Tout cela entraine une réduction notable des frais d'exploitation. La construction d'un tel réflecteur peut faire appel à un grand nombre d'éléments standardisés, ce qui en diminue le coût et facilite la construction sur le site.

L'invention ne se limite pas au mode de réalisation qui vient d'être décrit, elle en comporte au contraire toutes les variantes de réalisation. L'invention peut s'étendre ainsi aux réflecteurs solaires de forme non sphérique, par exemple de forme cylindrique ou autre.

**0091871**

## REVENDICATIONS

1. Réflecteur solaire concave constitué par une pluralité de miroirs rigides élémentaires(2) disposés les uns à côté des autres de façon à constituer une surface réfléchissante de grandes dimensions, caractérisé par le fait que chacun de ces miroirs est maintenu individuellement dans une position fixe à l'aide d'un support rigide(3) scellé dans le sol, les supports rigides de chaque miroir étant de hauteurs différentes pour chaque miroir associé, et les miroirs étant placés sur ces supports dans leur position fixe de telle sorte qu'ils constituent tous ensemble une surface réfléchissante concave pratiquement continue.

2. Réflecteur solaire concave selon la revendication 1, caractérisé par le fait qu'il présente une surface réfléchissante de forme sphérique.

3. Réflecteur solaire concave selon la revendication 1, caractérisé par le fait qu'il présente une surface réfléchissante de forme cylindrique.

Fig 1

Fig 2